# EUROPÄISCHE PATENTSCHRIFT

(11) **EP 3 607 473 B1**
(45) Veröffentlichungstag und Bekanntmachung des Hinweises auf die Patenterteilung: **30.03.2022**
(21) Anmeldenummer: 18727169.7
(22) Anmeldetag: 08.05.2018
(51) Int. Cl.: G06F 16/84

(54) **VERFAHREN ZUR RECHNERGESTÜTZTEN ERSTELLUNG VON DIGITALEN REGELN ZUR ÜBERWACHUNG DES TECHNISCHEN SYSTEMS**
METHOD FOR THE COMPUTER-ASSISTED CREATION OF DIGITAL RULES FOR MONITORING THE TECHNICAL SYSTEM
PROCÉDÉ D'ÉTABLISSEMENT DE RÈGLES NUMÉRIQUES ASSISTÉ PAR ORDINATEUR PERMETTANT DE SURVEILLER LE SYSTÈME TECHNIQUE

(30) Priorität: 18.05.2017 EP 17171786
(43) Veröffentlichungstag der Anmeldung: 12.02.2020
(73) Patentinhaber: Siemens Energy Global GmbH & Co. KG, 81739 München (DE)
(72) Erfinder: BRANDT, Sebastian-Philipp, 81827 München (DE); MEHDI, Gulnar, 82110 Germering (DE); ROSHCHIN, Mikhail, 81925 München (DE); RUNKLER, Thomas, 81929 München (DE)
(86) Internationale Anmeldenummer: PCT/EP2018/061814
(87) Internationale Veröffentlichungsnummer: WO 2018/210621

(56) Entgegenhaltungen:
- WO-A1-2015/074871
- WO-A2-2005/010625
- Lisa Theresa Abele: "Resource Monitoring in Industrial Manufacturing Using Knowledge-Based Technologies", , 28. April 2014 (2014-04-28), Seiten 1-227, XP055393038, Gefunden im Internet: URL:www.researchgate.net [gefunden am 2017-07-21]
- Gulnar Mehdi ET AL: "Towards Semantic Reasoning in Knowledge Management Systems", Proceedings of the 4th International Workshop on Artificial Intelligence for Knowledge Management, 9. Juli 2016 (2016-07-09), Seiten 1-7, XP055393046, New York City

## Beschreibung

Die Erfindung betrifft ein Verfahren sowie eine Vorrichtung zur rechnergestützten Erstellung von digitalen Regeln zur Überwachung eines technischen Systems. Ferner betrifft die Erfindung ein Verfahren und eine Vorrichtung zur Überwachung eines technischen Systems sowie ein Computerprogrammprodukt und ein Computerprogramm.

Aus dem Stand der Technik sind regelbasierte Überwachungsverfahren für technische Systeme bekannt, um den Betrieb des technischen Systems zu diagnostizieren und frühzeitig Fehlfunktionen zu erkennen bzw. vorherzusagen. Bei solchen regelbasierten Verfahren werden digitale Regeln durch eine Regel-Maschine zur Ausführung gebracht, wobei die Regeln in Abhängigkeit bestimmter Kriterien Unregelmäßigkeiten im Betrieb des technischen Systems erkennen und beispielsweise entsprechende Warnmeldungen ausgeben.

Z.B. wird in "Resource Monitoring in Industrial Manufacturing Using Knowledge-Based Technologies" Dissertation von Lisa Theresa Abele an der TU München (28. April 2014, Seiten 1-227, XP055393038) eine Ressourcenüberwachung behandelt. Regelbasierte Verfahren zur Überwachung von technischen Systemen sind spezifisch an die Komponenten des zu überwachenden Systems angepasst, d.h. es werden für das technische System spezifische Geräteidentifikationen zur Bezeichnung der Komponenten in den digitalen Regeln verwendet. Demzufolge sind regelbasierte Verfahren immer individuell für das entsprechende technische System entworfen und können nicht ohne weiteres auf ein anderes technisches System übertragen werden, selbst wenn dieses den gleichen bzw. einen ähnlichen Aufbau aufweist.

Aufgabe der Erfindung ist es deshalb, ein Verfahren zur rechnergestützten Erstellung von digitalen Regeln zur Überwachung eines technischen Systems zu schaffen, mit dem durch einen Benutzer erstellte Regeln auf einfache Weise für mehrere technische Systeme verwendet werden können.

Diese Aufgabe wird durch die unabhängigen Patentansprüche gelöst. Weiterbildungen der Erfindung sind in den abhängigen Ansprüchen definiert.

Mit dem erfindungsgemäßen Verfahren werden rechnergestützt (konkrete) digitale Regeln zur Überwachung eines technischen Systems erstellt, wobei das technische System eine elektrische Energieerzeugungsanlage oder ein elektrisches Energienetz oder eine Turbine oder eine Automatisierungsanlage oder ein Ver-kehrsmittel oder ein medizinisches Gerät umfasst. Der Begriff der Überwachung ist dabei weit zu verstehen und bezieht sich auf die Analyse eines technischen Systems basierend auf Betriebsdaten. Erfindungsgemäß wird eine Ontologie bereitgestellt, welche mehrere Klassen umfassend Klassen von Komponenten des technischen Systems und Klassen von Betriebszustandscharakteristika des technischen Systems sowie semantische Relationen zwischen den Klassen enthält. Die Komponenten sind dabei entsprechende Bestandteile des technischen Systems. Eine Komponente kann ferner auch das technische System als Ganzes betreffen. Vorzugsweise umfassen die Klassen von Komponenten Klassen von Bestandteilen des technischen Systems ohne Sensorfunktion sowie Klassen von Sensoren. Klassen von Bestandteilen ohne Sensorfunktion sind dabei Funktionseinheiten, welche sich auf eine Betriebsfunktion beziehen, die nicht unmittelbar mit sensierten Messwerten zusammenhängt. Nichtsdestotrotz können solche Klassen von Bestandteilen auch Sensoren enthalten. Die Klassen von Betriebszustandscharakteristika des technischen Systems hängen von Zustandsgrößen des technischen Systems ab. Beispiele solcher Klassen werden weiter unten genannt.

Als semantische Relationen können in der Ontologie an sich bekannte Relationen verwendet werden, wie z.B. eine Relation, welche spezifiziert, dass eine Klasse eine Unterklasse einer anderen Klasse ist, oder eine Relation, welche spezifiziert, dass eine Klasse ein Teil einer anderen Klasse ist. Die Definition von weiteren Relationen in Abhängigkeit von den in der Ontologie vorhandenen Klassen liegt dabei im Rahmen von fachmännischem Handeln. Sofern die Ontologie z.B. die weiter unten beschriebenen Klassen von Betriebsprozessen enthält, kann eine Relation auch beschreiben, dass eine Klasse einer Komponente an einer Klasse eines Betriebsprozesses beteiligt ist.

Im erfindungsgemäßen Verfahren wird eine Benutzerschnittstelle umfassend eine visuelle Anzeige bereitgestellt, wobei ein Benutzer über die Benutzerschnittstelle unter Verwendung der visuellen Anzeige abstrakte Regelformulierungen basierend auf den Klassen und den semantischen Relationen der Ontologie erstellen kann. Die vom Benutzer erstellten Regelformulierungen werden dabei als digitale abstrakte Regeln gespeichert. In einer bevorzugten Variante werden die digitalen abstrakten Regeln im XML-Format hinterlegt.

Schließlich werden die digitalen abstrakten Regeln automatisiert für das technische System als digitale konkrete Regeln instanziiert, indem die Klassen von Komponenten in den digitalen abstrakten Regeln auf spezifische Geräteidentifikationen des technischen Systems unter Zugriff auf eine Datenbank mit Daten über das technische System abgebildet werden und die Klassen von Betriebszustandscharakteristika in für das technische System spezifische Betriebszustandscharakteristika umfassend die spezifischen Geräteidentifikationen gewandelt werden. Es erfolgt somit eine automatisierte Abbildung einer generischen Regelsprache auf eine für das zu überwachende System spezifische Regelsprache. Hierdurch entsteht der Vorteil, dass abstrakte Regeln für gleiche bzw. ähnliche technische Systeme durch den Benutzer nicht jedes Mal neu für das spezielle technische System erstellt werden müssen, sondern durch geeignete Instanziierung mehrmals für gleiche bzw. ähnliche technische Systeme verwendet werden können.

In einer bevorzugten Ausführungsform erfolgt das Abbilden der Klassen von Komponenten in den digitalen abstrakten Regeln auf die spezifischen Geräteidentifikationen des technischen Systems basierend auf der R2RML-Sprache (R2RML = RDB to RDF Mapping Language). Dabei handelt es sich um einen Sprach-Standard des W3C-Konsortiums, um Informationen aus relationalen Datenbanken in RDF-Datensätze einer Ontologie abzubilden.

In einer weiteren Ausgestaltung des erfindungsgemäßen Verfahrens enthalten die Klassen von Komponenten nicht nur einzelne Komponenten, sondern auch Klassen von funktionalen Gruppen aus mehreren Teilkomponenten. Eine Klasse einer funktionalen Gruppe kann sich z.B. auf ein Ölsystem oder einen Gaspfad im technischen System beziehen.

Die Klassen von Betriebszustandscharakteristika enthalten in einer bevorzugten Variante folgende Klassen:
- zumindest eine Klasse zur Beschreibung einer Zustandsgröße im technischen System, und/oder
- zumindest eine Klasse zur Beschreibung eines Minimalwerts einer Zustandsgröße im technischen System;
- zumindest eine Klasse zur Beschreibung eines Maximalwerts einer Zustandsgröße im technischen System;
- zumindest eine Klasse zur Beschreibung eines Durchschnittswerts einer Zustandsgröße im technischen System;
- zumindest eine Klasse zur Beschreibung einer zeitlichen Änderung einer Zustandsgröße im technischen System.

Mit diesen Klassen werden somit Zustandsgrößen bzw. davon abhängige Werte charakterisiert. Die Klassen zur Beschreibung einer zeitlichen Änderung können dabei unterschiedliche Arten von Änderungen angeben, z.B. eine starke Änderung, eine mittlere Änderung oder eine langsame Änderung. Mit einer solchen Klasse können auch längerfristige Änderungen in der Form von Trends charakterisiert werden.

Die Klassen der Ontologie enthalten ferner Klassen von abstrakten Regeln, welche der Benutzer bei der Erstellung der abstrakten Regelformulierungen berücksichtigen kann und welche als entsprechende konkrete Regeln instanziiert werden. Auf diese Weise werden dem Benutzer bereits Regelbausteine zur Erstellung der abstrakten Regel vorgegeben, so dass die Regelerstellung vereinfacht wird.

In einer weiteren Ausgestaltung umfassen die Klassen der Ontologie ferner Klassen von Betriebsprozessen, welche ein Benutzer bei der Erstellung einer abstrakten Regelformulierung berücksichtigen kann, wobei im Rahmen der Instanziierung der digitalen konkreten Regeln Klassen von Betriebsprozessen in den digitalen abstrakten Regeln unter Zugriff auf die obige Datenbank auf spezifische Betriebsprozessidentifikationen des technischen Systems abgebildet werden. Diese Betriebsprozessidentifikationen sind dann in den für das technische System spezifischen Betriebszustandscharakteristika enthalten. Solche Betriebsprozesse können sich beispielsweise auf einen Startprozess oder einen Ausschaltprozess des technischen Systems beziehen. Mit diesen Klassen von Betriebsprozessen werden die Möglichkeiten zur Erstellung entsprechender Regeln erweitert.

In einer weiteren bevorzugten Ausführungsform wird im erfindungsgemäßen Verfahren ferner eine Abfrageschnittstelle bereitgestellt, mit der ein Benutzer basierend auf den Klassen und den semantischen Relationen der Ontologie Betriebsdaten des technischen Systems abfragen kann. Dies ist dann möglich, wenn die obige Datenbank solche Betriebsdaten enthält. Gegebenenfalls kann diese Variante auch online im Betrieb des technischen Systems eingesetzt werden, um auf aktuelle Betriebsdaten zuzugreifen.

Das erfindungsgemäße Verfahren wird zur Erstellung von Regeln für technische Systeme eingesetzt , wobei das technische System eine elektrische Energieerzeu-gungsanlage oder ein elektrisches Energienetz oder eine Turbine oder eine Automatisierungsanlage oder ein Ver-kehrsmittel oder ein medizinisches Gerät umfasst. Insbesondere kann das zu überwachende technische System eine elektrische Energieerzeugungsanlage oder ein elektrisches Energienetz oder eine Turbine, wie z.B. eine Gasturbine, oder eine Automatisierungsanlage oder ein Verkehrsmittel, wie z.B. ein Zug, oder ein medizinisches Gerät, wie z.B. ein Computertomograph oder ein Magnetresonanztomograph, sein. Unter einer Automatisierungsanlage ist dabei eine industrielle Anlage zur automatisierten Durchführung von Prozessen und insbesondere zur automatisierten Fertigung bzw. Herstellung von Produkten zu verstehen.

Die Erfindung betrifft darüber hinaus ein Verfahren zur Überwachung eines technischen Systems, wobei digitale konkrete Regeln mit dem soeben beschriebenen erfindungsgemäßen Verfahren bzw. einer oder mehreren bevorzugten Varianten dieses Verfahrens erzeugt werden und anschließend mit einer Regel-Maschine auf dem technischen System zu dessen Überwachung ausgeführt werden.

Die Erfindung betrifft darüber hinaus eine Vorrichtung zur rechnergestützten Erstellung von digitalen Regeln zur Überwachung eines technischen Systems, wobei die Vorrichtung derart ausgestaltet ist, dass sie im Betrieb das erfindungsgemäße Verfahren zur Erstellung von digitalen Regeln bzw. eine oder mehrere bevorzugte Varianten dieses Verfahrens durchführt.

Darüber hinaus betrifft die Erfindung eine Vorrichtung zur Überwachung eines technischen Systems, welches zur Durchführung des oben beschriebenen Verfahrens zur Überwachung eines technischen Systems eingerichtet ist.

Die Erfindung betrifft darüber hinaus ein Computerprogrammprodukt mit einem auf einem maschinenlesbaren Träger gespeicherten Programmcode zur Durchführung des erfindungsgemäßen Verfahrens zur Erstellung von digitalen Regeln bzw. zur Durchführung des erfindungsgemäßen Verfahrens zur Überwachung eines technischen Systems, wenn der Programmcode auf einem Rechner ausgeführt wird.

Ferner umfasst die Erfindung ein Computerprogramm, mit einem Programmcode zur Durchführung des erfindungsgemäßen Verfahrens zur Erstellung von digitalen Regeln bzw. zur Durchführung des erfindungsgemäßen Verfahrens zur Überwachung eines technischen Systems, wenn der Programmcode auf einem Rechner ausgeführt wird.

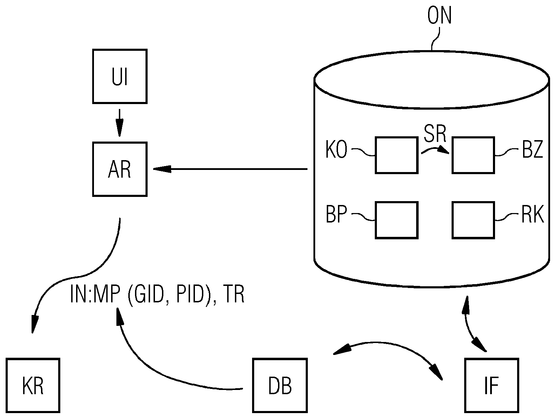

Ein Ausführungsbeispiel der Erfindung wird nachfolgend anhand der beigefügten Fig. 1 detailliert beschrieben. Diese Figur zeigt in schematischer Darstellung die wesentlichen Schritte einer Variante des erfindungsgemäßen Verfahrens.

Das anhand von Fig. 1 beschriebene Verfahren dient zur rechnergestützten Erstellung von Regeln für ein spezifisches technisches Systems, um mit diesen Regeln den Betrieb des technischen Systems zu überwachen. Ziel ist es dabei, einem Benutzer eine Schnittstelle zur Formulierung von abstrakten Regeln bereitzustellen, welche dann in konkrete Regeln für das spezifische technische System gewandelt werden.

Gemäß Fig. 1 wird in dem Verfahren zur Regelerstellung eine lediglich schematisch dargestellte Benutzerschnittstelle UI verwendet, welche eine visuelle Anzeige auf einem Display umfasst und mit der über entsprechende Benutzeraktionen, beispielsweise durchgeführt über einen Cursor und eine Computermaus, abstrakte Regeln erstellt werden können. Diese abstrakten Regeln sind in Fig. 1 allgemein mit AR bezeichnet. Zur Erstellung dieser Regeln ist in dem Verfahren eine Ontologie ON implementiert, welche die entsprechende Domäne des technischen Systems beschreibt und vorzugsweise auf OWL basiert (OWL = Web Ontology Language). Im hier betrachteten Ausführungsbeispiel wird eine Gasturbine als technisches System betrachtet, jedoch ist die Erfindung nicht auf ein solches technisches System beschränkt, sondern sie kann beispielsweise auch für elektrische Energieerzeugungsanlagen, elektrische Energienetze, Automatisierungsanlagen, Verkehrsmittel, medizinische Geräte und dergleichen eingesetzt werden.

Die Ontologie ON enthält in an sich bekannter Weise eine Vielzahl von Klassen. In dem Beispiel der Fig. 1 sind in der Ontologie Klassen KO von Komponenten des technischen Systems, Klassen BZ von Betriebszustandscharakteristika des technischen Systems sowie Klassen BP von Betriebsprozessen im technischen System vorgesehen. Darüber hinaus enthält die Ontologie Klassen RK von abstrakten Regeln, die als Bausteine bei der Erstellung der abstrakten Regeln AR genutzt werden können. Die genannten Klassen sind in Fig. 1 lediglich schematisch durch entsprechende Rechtecke angedeutet.

In an sich bekannter Weise bestehen zwischen den Klassen semantische Relationen SR, wobei beispielhaft in Fig. 1 nur eine Relation durch einen entsprechenden Pfeil angedeutet ist. Die semantischen Relationen spezifizieren dabei einen Zusammenhang, der zwischen der einen Klasse und der damit verbundenen anderen Klasse besteht. Je nach Ausgestaltung der Ontologie können diese Relationen unterschiedliche Detaillierungsgrade aufweisen. Im Beispiel der Fig. 1 enthalten die Relationen u.a. eine Relation, welche spezifiziert, dass eine Klasse eine Unterklasse einer anderen Klasse ist, und eine Relation, welche spezifiziert, dass eine Klasse ein Teil aus einer anderen Klasse ist. Die Relationen enthalten darüber hinaus Relationen, welche beschreiben, dass eine Komponente des technischen Systems an einem bestimmten Betriebsprozess bzw. an einer bestimmten Regel beteiligt ist. Vorzugsweise sind auch noch weitere semantische Relationen vorgesehen, wobei die entsprechende Definition solcher Relationen im Rahmen von fachmännischem Handeln liegt.

Beispiele für Klassen KO von Komponenten in der obigen Ontologie ON sind Teile einer Gasturbine, wie z.B. bestimmte Rotorblätter bzw. bestimmte Sensoren, welche Messdaten erfassen, wie z.B. Sensoren zur Messung von Brennkammertemperaturen oder Sensoren zur Messung von Rotordrehzahlen.

Beispiele für Klassen BZ von Betriebszustandscharakteristika sind in der Gasturbine gemessene Zustandsgrößen, wie z.B. Temperaturen oder Drehzahlen, bzw. Minimalwerte, Maximalwerte und Durchschnittswerte solcher Zustandsgrößen. Ein weiteres Beispiel einer Klasse BZ eines Betriebszustandscharakteristikums ist ein sog. zeitlicher Trend, der eine längerfristige zeitliche Entwicklung einer Zustandsgröße spezifiziert. Ferner können die Betriebszustandscharakteristika Anstiege bzw. Abnahmen von Zustandsgrößen spezifizieren, wobei der Anstieg und die Abnahme gegebenenfalls auch dahingehend klassifiziert werden kann, ob ein starker, mittlerer oder schwacher Anstieg bzw. Abfall vorliegt.

Beispiele von Klassen BP von Betriebsprozessen sind das Anfahren oder Herunterfahren der betrachteten Gasturbine. Eine Klasse RK einer abstrakten Regel kann nach Art einer Schablone vorgeben, dass ein bestimmter Fehler in der Gasturbine vorliegt, wenn Messgrößen aus einem bestimmten Wertebereich herauslaufen.

Ein Benutzer kann nunmehr über die Benutzerschnittstelle UI unter Zugriff auf die genannten Klassen und semantischen Relationen der Ontologie ON verschiedene abstrakte Regeln AR erstellen, die im hier betrachteten Ausführungsbeispiel im XML-Format gespeichert werden. Ein Beispiel einer solchen abstrakten Regel kann derart lauten, dass im Falle, dass die über einen Geschwindigkeitssensor gemessene Durchschnittsgeschwindigkeit eines Rotors eine vorbestimmte Grenze über einen vorbestimmten Zeitraum hinweg überschreitet und gleichzeitig ein starker Anstieg einer Brennkammertemperatur in der Gasturbine über diesen Zeitraum hinweg vorliegt, eine Warnmeldung während des Betriebs des technischen Systems ausgegeben wird.

Die vom Benutzer erstellten abstrakten Regeln AR sind generisch für Komponenten des technischen Systems formuliert und müssen nunmehr in Bezug zu konkreten Bauteilen des betrachteten Systems, d.h. im vorliegenden Fall einer speziellen Gasturbine, gesetzt werden. Um dies zu erreichen, werden die abstrakten Regeln AR in einem Instanziierungsschritt IN instanziiert, d.h. sie werden in konkrete Regeln KR gewandelt. Dabei werden die in den abstrakten Regeln enthaltenen Klassen KO von Komponenten sowie Klassen BP von Betriebsprozessen in konkrete Identifikationen umgesetzt. Insbesondere werden die Klassen KO Geräteidentifikationen GID und die Klassen BP Prozessidentifikationen PID zugeordnet, wobei diese Identifikationen spezifisch für die konkrete zu überwachende Gasturbine sind. Es wird somit ein Mapping MP von generischen Klassen auf konkrete Indentifikationen durchgeführt. Darüber hinaus werden die Klassen BZ von Betriebszustandscharakteristika im Rahmen eines Übersetzungsschritts TR in konkrete Betriebszustandscharakteristika gewandelt, wobei diese Charakteristika nunmehr entsprechende Geräteidentifikationen GID bzw. Prozessidentifikationen PID enthalten.

Um das soeben beschriebene Mapping MP zu erreichen, wird auf Informationen aus einer Datenbank DB zugegriffen, welche konkrete Daten des zu überwachenden technischen Systems spezifiziert und insbesondere die Geräteidentifikationen und Prozessidentifikationen enthält. Das Mapping wird in der hier betrachteten Variante basierend auf dem an sich bekannten Sprach-Standard R2RML durchgeführt. Als Ergebnis erhält man nach der Instanziierung IN einen Satz von konkreten Regeln KR. Diese Regeln können dann in dem zu überwachenden technischen System gespeichert werden und dort mit einer Regel-Maschine ausgeführt werden, so dass bei Erfüllung entsprechender Bedingungen in den Regeln Warnmeldungen ausgegeben werden oder andere Gegenmaßnahmen, wie z.B. ein Abschalten der Gasturbine, eingeleitet werden.

Die Architektur der Fig. 1 stellt darüber hinaus eine Abfrageschnittstelle IF bereit, die beispielsweise die an sich bekannte Abfragesprache SPARQL verwendet. Über diese Abfrageschnittstelle kann ein Benutzer Informationen zu dem technischen System aus der Datenbank DB unter Verwendung der Begrifflichkeiten der Ontologie ON extrahieren. Ein Beispiel einer solchen Abfrage ist die Suche nach allen Geräteidentifikationen von Sensoren, die in einer bestimmten Komponente des technischen Systems enthalten sind und die bei der abstrakten Regel "Analyse von Vibrationen im technischen System" beteiligt sind. Sofern in der Datenbank entsprechende Messwerte der gesuchten Sensoren enthalten sind, können diese gleichzeitig ausgegeben werden. Im Besonderen kann die Architektur der Fig. 1 auch direkt an das zu überwachende technische System gekoppelt sein, so dass während der Überwachung des technischen Systems über die Abfrageschnittstelle IF aktuelle Messwerte ausgelesen werden können.

Die im Vorangegangenen beschriebene Ausführungsform der Erfindung weist eine Reihe von Vorteilen auf. Insbesondere wird basierend auf dem semantischen Modell einer Ontologie die Möglichkeit geschaffen, auf einfache Weise abstrakte Regeln für die Überwachung eines technischen Systems zu formulieren, wobei diese Regeln automatisch in konkrete Regeln für das betrachtete technische System übersetzt werden. Der Aufwand zur Erstellung von Regeln wird hierdurch wesentlich verringert. Dies konnte durch Experimente nachgewiesen werden. Im Rahmen dieser Experimente haben Benutzer entsprechende Regeln direkt in der spezifischen Regelsprache des technischen Systems sowie unter Verwendung der erfindungsgemäßen Ontologie erstellt. Die Erstellung der abstrakten Regeln basierend auf der Ontologie konnte durch den Benutzer wesentlich schneller durchgeführt werden als basierend auf der konkreten Regelsprache.

Darüber hinaus wird eine Schnittstelle zur Abfrage von Informationen aus dem technischen System geschaffen, wobei für die Abfrage die generischen Begriffe aus der Ontologie verwendet werden können. Dies ermöglicht eine einfache Suche nach heterogenen Datenquellen unter Verwendung von semantischen Begriffen der Ontologie.

## Patentansprüche

1. Verfahren zur rechnergestützten Erstellung von digitalen Regeln zur Überwachung eines technischen Systems, bei dem:
- eine Ontologie (ON) bereitgestellt wird, welche mehrere Klassen umfassend Klassen (KO) von Komponenten des technischen Systems, Klassen (BZ) von Betriebszustandscharakteristika des technischen Systems und Klassen (RK) von abstrakten Regeln sowie semantische Relationen (SR) zwischen den Klassen enthält;
- eine Benutzerschnittstelle (UI) umfassend eine visuelle Anzeige bereitgestellt wird, wobei ein Benutzer über die Benutzerschnittstelle (UI) unter Verwendung der visuellen Anzeige abstrakte Regelformulierungen basierend auf den Klassen und den semantischen Relationen (SR) der Ontologie (ON) erstellen kann, wobei vom Benutzer erstellte Regelformulierungen als digitale abstrakte Regeln (AR) gespeichert werden;
- die digitalen abstrakten Regeln (AR) automatisiert für das technische System als digitale konkrete Regeln (KR) instanziiert werden, indem die Klassen (KO) von Komponenten in den digitalen abstrakten Regeln (AR) auf spezifische Geräteidentifikationen (GID) des technischen Systems unter Zugriff auf eine Datenbank (DB) mit Daten über das technische System abgebildet werden und die Klassen (BZ) von Betriebszustandscharakteristika in für das technische System spezifische Betriebszustandscharakteristika umfassend die spezifischen Geräteidentifikationen (GID) gewandelt werden, wobei der Benutzer die Klassen (RK) von abstrakten Regeln bei der Erstellung der abstrakten Regelformulierungen berücksichtigen kann und die Klassen (RK) von abstrakten Regeln als entsprechende konkrete Regeln instanziiert werden,
wobei das technische System eine elektrische Energieerzeugungsanlage oder ein elektrisches Energienetz oder eine Turbine oder eine Automatisierungsanlage oder ein Verkehrsmittel oder ein medizinisches Gerät umfasst.

2. Verfahren nach Anspruch 1, wobei das Abbilden der Klassen (KO) von Komponenten in den digitalen abstrakten Regeln (AR) auf die spezifischen Geräteidentifikationen (GID) des technischen Systems auf der R2RML-Sprache basiert.

3. Verfahren nach Anspruch 1 oder 2, wobei die digitalen abstrakten Regeln (AR) in XML gespeichert werden.

4. Verfahren nach einem der vorhergehenden Ansprüche, wobei die Klassen (KO) von Komponenten des technischen Systems Klassen von Bestandteilen des technischen Systems ohne Sensorfunktion sowie Klassen von Sensoren umfassen.

5. Verfahren nach einem der vorhergehenden Ansprüche, wobei die Klassen (KO) von Komponenten Klassen von funktionalen Gruppen aus mehreren Teilkomponenten umfassen.

6. Verfahren nach einem der vorhergehenden Ansprüche, wobei die Klassen (BZ) von Betriebszustandscharakteristika umfassen:
- zumindest eine Klasse zur Beschreibung einer Zustandsgröße im technischen System, und/oder
- zumindest eine Klasse zur Beschreibung eines Minimalwerts einer Zustandsgröße im technischen System;
- zumindest eine Klasse zur Beschreibung eines Maximalwerts einer Zustandsgröße im technischen System;
- zumindest eine Klasse zur Beschreibung eines Durchschnittswerts einer Zustandsgröße im technischen System;
- zumindest eine Klasse zur Beschreibung einer zeitlichen Änderung einer Zustandsgröße im technischen System.

7. Verfahren nach einem der vorhergehenden Ansprüche, wobei die Klassen der Ontologie (ON) ferner Klassen (BP) von Betriebsprozessen umfassen, welche ein Benutzer bei der Erstellung der abstrakten Regelformulierungen berücksichtigen kann, wobei im Rahmen der Instanziierung der digitalen konkreten Regeln (KR) Klassen (BP) von Betriebsprozessen in den digitalen abstrakten Regeln (AR) unter Zugriff auf die Datenbank (DB) auf spezifische Betriebsprozessidentifikationen (PID) des technischen Systems abgebildet werden, welche in den für das technische System spezifischen Betriebszustandscharakteristika enthalten sind.

8. Verfahren nach einem der vorhergehenden Ansprüche, wobei ferner eine Abfrageschnittstelle (IF) bereitgestellt wird, mit der ein Benutzer basierend auf den Klassen und den semantischen Relationen (SR) der Ontologie (ON) Betriebsdaten des technischen Systems abfragen kann.

9. Verfahren zur Überwachung eines technischen Systems, wobei digitale konkrete Regeln (KR) mit einem Verfahren nach einem der Ansprüche 1 bis 8 erzeugt werden und mittels einer Regel-Maschine auf dem technischen System zu dessen Überwachung ausgeführt werden.

10. Vorrichtung zur rechnergestützten Erstellung von digitalen Regeln zur Überwachung eines technischen Systems, wobei die Vorrichtung derart ausgestaltet ist, dass sie im Betrieb ein Verfahren durchführt, bei dem:
- eine Ontologie (ON) bereitgestellt wird, welche mehrere Klassen umfassend Klassen (KO) von Komponenten des technischen Systems, Klassen (BZ) von Betriebszustandscharakteristika des technischen Systems und Klassen (RK) von abstrakten Regeln sowie semantische Relationen (SR) zwischen den Klassen enthält;
- eine Benutzerschnittstelle (UI) umfassend eine visuelle Anzeige bereitgestellt wird, wobei ein Benutzer über die Benutzerschnittstelle (UI) unter Verwendung der visuellen Anzeige abstrakte Regelformulierungen basierend auf den Klassen und den semantischen Relationen (SR) der Ontologie (ON) erstellen kann, wobei vom Benutzer erstellte Regelformulierungen als digitale abstrakte Regeln (AR) gespeichert werden;
- die digitalen abstrakten Regeln (AR) automatisiert für das technische System als digitale konkrete Regeln (KR) instanziiert werden, indem die Klassen (KO) von Komponenten in den digitalen abstrakten Regeln (AR) auf spezifische Geräteidentifikationen (GID) des technischen Systems unter Zugriff auf eine Datenbank (DB) mit Daten über das technische System abgebildet werden und die Klassen (BZ) von Betriebszustandscharakteristika in für das technische System spezifische Betriebszustandscharakteristika umfassend die spezifischen Geräteidentifikationen (GID) gewandelt werden, wobei der Benutzer die Klassen (RK) von abstrakten Regeln bei der Erstellung der abstrakten Regelformulierungen berücksichtigen kann und die Klassen (RK) von abstrakten Regeln als entsprechende konkrete Regeln instanziiert werden, und wobei das technische System eine elektrische Energieerzeugungsanlage oder ein elektrisches Energienetz oder eine Turbine oder eine Automatisierungsanlage oder ein Verkehrsmittel oder ein medizinisches Gerät umfasst.

11. Vorrichtung nach Anspruch 10, welche derart ausgestaltet ist, dass mit der Vorrichtung ein Verfahren nach einem der Ansprüche 2 bis 8 durchführbar ist.

12. Vorrichtung zur Überwachung eines technischen Systems, wobei die Vorrichtung zur Durchführung eines Verfahrens nach Anspruch 9 eingerichtet ist.

13. Computerprogrammprodukt mit einem auf einem maschinenlesbaren Träger gespeicherten Programmcode zur Durchführung eines Verfahrens nach einem der Ansprüche 1 bis 9, wenn der Programmcode auf einem Rechner ausgeführt wird.

14. Computerprogramm mit einem Programmcode zur Durchführung eines Verfahrens nach einem der Ansprüche 1 bis 9, wenn der Programmcode auf einem Rechner ausgeführt wird.

## Claims

1. Method for the computer-aided creation of digital rules for monitoring a technical system, in which:
- an ontology (ON) is provided that contains multiple classes comprising classes (KO) of components of the technical system, classes (BZ) of operating state characteristics of the technical system and classes (RK) of abstract rules and also semantic relations (SR) between the classes;
- a user interface (UI) comprising a visual display is provided, wherein a user can use the user interface (UI) to create abstract rule formulations on the basis of the classes and the semantic relations (SR) of the ontology (ON) by using the visual display, rule formulations created by the user being stored as digital abstract rules (AR);
- the digital abstract rules (AR) are instantiated for the technical system in automated fashion as digital actual rules (KR) by virtue of the classes (KO) of components in the digital abstract rules (AR) being mapped onto specific device identifications (GID) of the technical system by accessing a database (DB) containing data about the technical system, and the classes (BZ) of operating state characteristics being converted into operating state characteristics specific to the technical system that comprise the specific device identifications (GID), wherein the user can take into consideration the classes (RK) of abstract rules for creating the abstract rule formulations and the classes (RK) of abstract rules are instantiated as applicable actual rules, wherein the technical system comprises an electrical power generation installation or an electrical power grid or a turbine or an automation installation or a means of transport or a medical device.

2. Method according to Claim 1, wherein the mapping of the classes (KO) of components in the digital abstract rules (AR) onto the specific device identifications (GID) of the technical system is based on the R2RML language.

3. Method according to Claim 1 or 2, wherein the digital abstract rules (AR) are stored in XML.

4. Method according to one of the preceding claims, wherein the classes (KO) of components of the technical system comprise classes of parts of the technical system without a sensor function and classes of sensors.

5. Method according to one of the preceding claims, wherein the classes (KO) of components comprise classes of functional groups comprising multiple subcomponents.

6. Method according to one of the preceding claims, wherein the classes (BZ) of operating state characteristics comprise:
- at least one class for describing a state variable in the technical system, and/or
- at least one class for describing a minimum value of a state variable in the technical system;
- at least one class for describing a maximum value of a state variable in the technical system;
- at least one class for describing an average value of a state variable in the technical system;
- at least one class for describing a change in a state variable in the technical system over time.

7. Method according to one of the preceding claims, wherein the classes of the ontology (ON) further comprise classes (BP) of operating processes that a user can take into consideration for creating the abstract rule formulations, wherein the instantiation of the digital actual rules (KR) involves classes (BP) of operating processes in the digital abstract rules (AR) being mapped onto specific operating process identifications (PID) of the technical system, which are contained in the operating state characteristics specific to the technical system, by accessing the database (DB).

8. Method according to one of the preceding claims, wherein furthermore a query interface (IF) is provided that a user can use to query operating data of the technical system on the basis of the classes and the semantic relations (SR) of the ontology (ON).

9. Method for monitoring a technical system, wherein digital actual rules (KR) are produced using a method according to one of Claims 1 to 8 and are executed by means of a rules engine on the technical system for the purpose of monitoring the latter.

10. Apparatus for the computer-aided creation of digital rules for monitoring a technical system, wherein the apparatus is designed such that during operation it performs a method in which:
- an ontology (ON) is provided that contains multiple classes comprising classes (KO) of components of the technical system, classes (BZ) of operating state characteristics of the technical system and classes (RK) of abstract rules and also semantic relations (SR) between the classes;
- a user interface (UI) comprising a visual display is provided, wherein a user can use the user interface (UI) to create abstract rule formulations on the basis of the classes and the semantic relations (SR) of the ontology (ON) by using the visual display, rule formulations created by the user being stored as digital abstract rules (AR);
- the digital abstract rules (AR) are instantiated for the technical system in automated fashion as digital actual rules (KR) by virtue of the classes (KO) of components in the digital abstract rules (AR) being mapped onto specific device identifications (GID) of the technical system by accessing a database (DB) containing data about the technical system, and the classes (BZ) of operating state characteristics being converted into operating state characteristics specific to the technical system that comprise the specific device identifications (GID), wherein the user can take into consideration the classes (RK) of abstract rules for creating the abstract rule formulations and the classes (RK) of abstract rules are instantiated as applicable actual rules, and wherein the technical system comprises an electrical power generation installation or an electrical power grid or a turbine or an automation installation or a means of transport or a medical device.

11. Apparatus according to Claim 10, which is designed such that a method according to one of Claims 2 to 8 is performable using the apparatus.

12. Apparatus for monitoring a technical system, wherein the apparatus is configured to perform a method according to Claim 9.

13. Computer program product having a program code stored on a machine-readable carrier for performing a method according to one of Claims 1 to 9 when the program code is executed on a computer.

14. Computer program having a program code for performing a method according to one of Claims 1 to 9 when the program code is executed on a computer.

## Revendications

1. Procédé d'établissement assisté par ordinateur de règles numériques de contrôle d'un système technique, dans lequel :
- on se procure une ontologie (ON), qui contient plusieurs classes comprenant des classes (KO) de composants du système technique, des classes (BZ) de caractéristiques d'état de fonctionnement du système technique et des classes (RK) de règles abstraites ainsi que des relations (SR) sémantiques entre les classes ;
- on se procure une interface (UI) d'utilisateur comprenant un affichage visuel, un utilisateur pouvant, par l'intermédiaire de l'interface (UI) d'utilisateur en utilisant l'affichage visuel, établir des formulations de règles abstraites reposant sur les classes et les relations (SR) sémantiques de l'ontologie (ON), des formulations de règles établies par l'utilisateur pouvant être mises en mémoire sous la forme de règles (AR) numériques abstraites ;
- on instance, comme règles (KR) numériques concrètes, les règles (AR) numériques abstraites de manière automatisée pour le système technique en reproduisant en ayant accès à une base (DB) de données ayant des données sur le système technique, des classes (KO) de composants dans les règles (AR) numériques abstraites en des identifications (GID) d'appareil spécifiques du système technique et en transformant les classes (BZ) de caractéristiques d'état de fonctionnement en des caractéristiques d'état de fonctionnement spécifiques au système technique comprenant les identifications (GID) d'appareil spécifiques, l'utilisateur pouvant prendre en compte les classes (RK) de règles abstraites lors de l'établissement des formulations de règles abstraites et les classes (RK) de règles abstraites étant instanciées sous la forme de règles concrètes correspondantes,
dans lequel le système technique comprend une installation de production d'énergie électrique ou un réseau d'énergie électrique ou une turbine ou une installation d'automatisation ou un moyen de transport ou un appareil médical.

2. Procédé suivant la revendication 1, dans lequel la reproduction des classes (KO) de composants dans les règles (AR) numériques abstraites repose sur les identifications (GID) d'appareil spécifiques du système technique sur le langage R2RML.

3. Procédé suivant la revendication 1 ou 2, dans lequel on met en mémoire dans XML les règles (AR) numériques abstraites.

4. Procédé suivant l'une des revendications précédentes, dans lequel les classes (KO) de composants du système technique comprennent des classes de parties constitutives du système technique sans fonction de capteur ainsi que des classes de capteurs.

5. Procédé suivant l'une des revendications précédentes, dans lequel les classes (KO) de composants comprennent des classes de groupes fonctionnels composés de plusieurs composants partiels.

6. Procédé suivant l'une des revendications précédentes, dans lequel les classes (BZ) de caractéristiques d'état de fonctionnement comprennent :
- au moins une classe de description d'une grandeur d'état du système technique et/ou
- au moins une classe de description d'une valeur minimum d'une grandeur d'état du système technique ;
- au moins une classe de description d'une valeur maximum d'une grandeur d'état du système technique ;
- au moins une classe de description d'une valeur moyenne d'une grandeur d'état du système technique ;
- au moins une classe de description d'une variation en fonction du temps d'une grandeur d'état du système technique.

7. Procédé suivant l'une des revendications précédentes, dans lequel les classes de l'ontologie (ON) comprennent en outre des classes (BP) de processus de fonctionnement, qu'un utilisateur peut prendre en compte lors de l'établissement des formulations de règles abstraites, dans lequel, dans le cas de l'instanciation des règles (KR) numériques concrètes, on reproduit sur des identifications (PID) de processus de fonctionnement spécifiques du système technique, en accédant à la base (DB) de données, des classes (BP) de processus de fonctionnement dans les règles (AR) numériques abstraites, identifications (PID) qui sont contenues dans les caractéristiques d'état de fonctionnement spécifiques au système technique.

8. Procédé suivant l'une des revendications précédentes, dans lequel on se procure en outre une interface (IF) de demande par laquelle un utilisateur peut demander, sur la base des classes et des relations (SR) sémantiques de l'ontologie (ON), des données de fonctionnement du système technique.

9. Procédé de contrôle d'un système technique, dans lequel on produit des règles (KR) numériques concrètes par un procédé suivant l'une des revendications 1 à 8 et on les exécute au moyen d'une machine de réglage sur le système technique pour son contrôle.

10. Installation d'établissement assisté par ordinateur de règles numériques de contrôle d'un système technique, l'installation étant conformée de manière à effectuer en fonctionnement un procédé, dans lequel :
- on se procure une ontologie (ON), qui contient plusieurs classes comprenant des classes (KO) de composants du système technique, des classes (BZ) de caractéristiques d'état de fonctionnement du système technique et des classes (RK) de règles abstraites ainsi que des relations (SR) sémantiques entre les classes ;
- on se procure une interface (UI) d'utilisateur comprenant un affichage visuel, un utilisateur pouvant, par l'intermédiaire de l'interface (UI) d'utilisateur en utilisant l'affichage visuel, établir des formulations de règles abstraites reposant sur les classes et les relations (SR) sémantiques de l'ontologie (ON), des formulations de règles établies par l'utilisateur pouvant être mises en mémoire sous la forme de règles (AR) numériques abstraites ;
- on instance, comme règles (KR) numériques concrètes, les règles (AR) numériques abstraites de manière automatisée pour le système technique, en reproduisant en ayant accès à une base (DB) de données ayant des données sur le système technique, des classes (KO) de composants dans les règles (AR) numériques abstraites en des identifications (GID) d'appareil spécifiques du système technique et en transformant les classes (BZ) de caractéristiques d'état de fonctionnement en des caractéristiques d'état de fonctionnement spécifiques au système technique comprenant les identifications (GID) d'appareil spécifiques, l'utilisateur pouvant prendre en compte les classes (RK) de règles abstraites lors de l'établissement des formulations de règles abstraites et les classes (RK) de règles abstraites étant instanciées sous la forme de règles concrètes correspondantes, dans lequel le système technique comprend une installation de production d'énergie électrique ou un réseau d'énergie électrique ou une turbine ou une installation d'automatisation ou un moyen de transport ou un appareil médical.

11. Installation suivant la revendication 10, qui est conformée de manière à pouvoir effectuer par l'installation un procédé suivant l'une des revendications 2 à 8.

12. Installation de contrôle d'un système technique, dans laquelle l'installation est conçue pour effectuer un procédé suivant la revendication 9.

13. Produit de programme d'ordinateur comprenant un code de programme mis en mémoire sur un support déchiffrable par ordinateur pour effectuer un procédé suivant l'une des revendications 1 à 9, lorsque le code de programme est exécuté sur un ordinateur.

14. Programme d'ordinateur ayant un code de programme pour effectuer un procédé suivant l'une des revendications 1 à 9, lorsque le code de programme est exécuté sur un ordinateur.
